# EUROPEAN PATENT APPLICATION

(11) **EP 2 363 785 A1**
(43) Date of publication of application: **07.09.2011**
(21) Application number: 11151770.2
(22) Date of filing: 21.01.2011
(51) Int. Cl.: G06F 3/041

(54) **Touch screen having adaptive input parameter**

(30) Priority: 03.02.2010 US 699591
(71) Applicant: Honeywell International Inc., Morristown, NJ 07962 (US)
(72) Inventor: Whitlow Stephen, Morristown, NJ 07962-2245 (US); Rogers William, Morristown, NJ 07962-2245 (US); Lancaster Jeff, Morristown, NJ 07962-2245 (US); De Mers Robert E., Morristown, NJ 07962-2245 (US); Smart Andrew, Morristown, NJ 07962-2245 (US)
(74) Representative: Buckley, Guy Julian

(57) **Abstract**

A method is provided for modifying input parameters of a touch panel in response to movement of the panel due to vibrations, turbulence, or a "G" force. The method includes sensing movement of a touch panel, the touch panel having a display region requiring a touch to indicate an input defined by the parameter, a threshold of the sensed movement being above which a user may be prevented from physically providing an accurate touch input due to the movement, and modifying the parameter based on the sensed movement being above the threshold. Feedback may be provided and modified in response to the parameter being satisfied by the touch.

## Description

### TECHNICAL FIELD

The present invention generally relates to touch screens and more particularly to a touch screen having input requirements that are modifiable in response to external forces.

### BACKGROUND

World wide air traffic is projected to double every ten to fourteen years and the International Civil Aviation Organization (ICAO) forecasts world air travel growth of five percent per annum until the year 2020. Such growth may have an influence on flight performance and may increase the workload of the flight crew. One such influence on flight performance has been the ability for the flight crew to input data while paying attention to other matters within and outside of the cockpit, especially during periods when movement makes it difficult to touch the panel in the desired manner or location. The ability to easily and quickly input data can significantly improve situational awareness of the flight crew resulting in increased flight safety and performance by reducing the flight crew workload.

Many electronic devices, such as aircraft flight deck operational equipment, cursor control devices (CCDs), hard knobs, switches, and hardware keyboards, are increasingly being replaced by touch panels. A touch panel offers intuitive input for a computer or other data processing devices.

However, many of the known touch panels particularly suited for low-end general aviation applications are relatively small, and each key may be so small that input accuracy may decline during movement of the touch panel and/or the pilot caused by turbulence, aircraft vibration, and/or G forces, for example. Such a reduction in accuracy would induce additional attention and workload from the aircrew in an effort to successfully complete touch panel entries.

Accordingly, it is desirable to provide a touch screen whose input is adaptive to the movement caused by turbulence, G forces, and/or equipment vibrations. Furthermore, other desirable features and characteristics of the present invention will become apparent from the subsequent detailed description and the appended claims, taken in conjunction with the accompanying drawings and the foregoing technical field and background.

### BRIEF SUMMARY

An apparatus is provided for modifying the input parameters of a touch panel in response to movement of the panel due to vibrations, turbulence, or a "G" force. The apparatus comprises an accelerometer for sensing movement, a touch panel coupled to the accelerometer and having at least one display region requiring a touch to indicate an input defined by a parameter, and a processor coupled to the accelerometer and the touch panel, and configured to modify the parameter in response to the movement being above a predefined threshold that would likely induce a high level of touch errors.

A method is provided including sequentially repeating the steps of sensing movement of a touch panel, the touch panel having a display region requiring a touch to indicate an input defined by a parameter, a threshold of the sensed movement being above which error-prone touch interactions would likely occur, and modifying the first parameter based on the sensed movement being above the threshold.

### BRIEF DESCRIPTION OF THE DRAWINGS

The present invention will hereinafter be described in conjunction with the following drawing figures, wherein like numerals denote like elements, and

FIG. 1 is a block diagram of an aircraft system for presenting images on a display;

FIG. 2 is a flow chart in accordance with a first exemplary embodiment;

FIG. 3 is a flow chart in accordance with a second exemplary embodiment;

FIG. 4 is a first representative diagram of touch screen in accordance with the exemplary embodiments;

FIG. 5 is a second representative diagram of touch screen in accordance with the exemplary embodiments; and

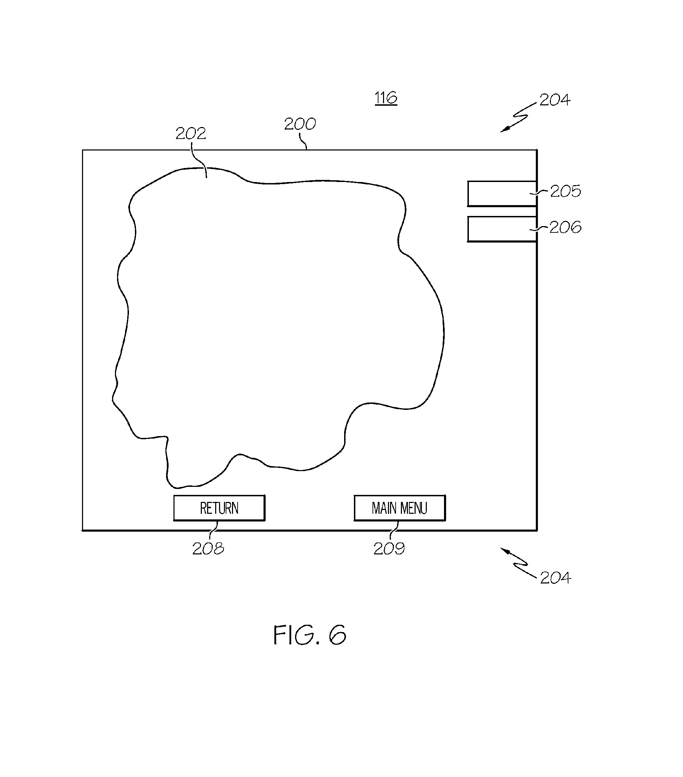

FIG. 6 is a third representative diagram of touch screen in accordance with the exemplary embodiments.

### DETAILED DESCRIPTION

The following detailed description is merely exemplary in nature and is not intended to limit application and uses. Furthermore, there is no intention to be bound by any theory presented in the preceding technical field, background, brief summary, or the following detailed description.

Generally, a method and input device are provided for adapting (modifying) input requirements of a touch panel in response to a motion. Touch panel as used herein includes a transparent touch screen providing changeable visual information and an opaque panel. The motion includes, for example, turbulence, engine vibration, and G forces. As the motion surpasses a threshold that is indicative of a less than preferred environment to use the touch panel, input parameters of the touch panel are modified in order to compensate for the less than preferred environment. The modifications to the input parameters include, for example, increasing the force of a required touch, increasing the touch-sensitive areas around visual touch targets on the touch panel sensing the touch, increasing a period of time between sensed touches to prevent the misreading of an inadvertent "double tap", disabling a region of the panel sensing a touch for a particular function, and optionally enabling another input device or a soft key. Additionally, feedback produced by the touch panel may be modified, including enhancing an audible, visual, and/or haptic feedback, and changing the frequency of an audible or haptic feedback so that it does not match the frequency of the motion (vibration), thus making it more salient to the user.

A touch panel is disclosed having at least one display region configured to display one or more symbols. Symbols as used herein are defined to include alphanumeric characters, icons, signs, words, terms, phrases, and menu items. A particular symbol is selected by sensing the application (touch) of a digit, such as a finger or a stylus, to the touch-sensitive region containing that symbol. In some exemplary embodiments, the digit may be swiped, or moved, in a particular direction to enable a desired function. In other exemplary embodiments, two or more digits may be swiped in different directions to enable a desired function. Each display region includes touch-sensing circuitry disposed within for sensing the application and/or movement of the digit or digits.

There are many types of touch panel sensing technologies, including capacitive, resistive, infrared, surface acoustic wave, and embedded optical. All of these technologies sense touches on a screen. For example, US patent 6,492,979 discloses the use of a combination of capacitive touch screen and force sensors, US patent 7,196,694 discloses the use of force sensors at the peripherals of the touch screen to determine the position of a touch, and US patent publication 2007/0229464 discloses the use of a capacitive force sensor array, overlaying a display to form a touch screen. The operation of a touch panel is well-known and is thus not described further herein.

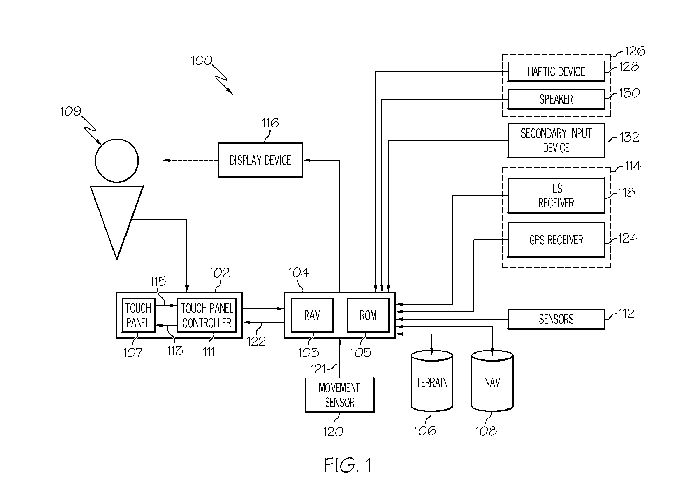

Though the method and touch panel of the exemplary embodiments may be used in any type of electronic device that moves, for example, vehicles and heavy machinery, and small handheld mobile devices such as smart phones, the use in an aircraft system is described as an example. Referring to FIG. 1, a flight deck display system 100 includes a user interface 102, a processor 104, one or more terrain databases 106 sometimes referred to as a Terrain Avoidance and Warning System (TAWS), one or more navigation databases 108, sensors 112, external data sources 114, and one or more display devices 116. The user interface 102 is in operable communication with the processor 104 and is configured to receive input from a user 109 (e.g., a pilot) and, in response to the user input, supplies command signals to the processor 104. The user interface 102 may be any one, or combination, of various known user interface devices including, but not limited to, one or more buttons, switches, or knobs (not shown). In the depicted embodiment, the user interface 102 includes a touch panel 107 and a touch panel controller 111. The touch panel controller 111 provides drive signals 113 to a touch panel 107, and a sense signal 115 is provided from the touch panel 107 to the touch panel controller 111, which periodically provides a controller signal 117 of the determination of a touch to the processor 104. The processor 104 interprets the controller signal 117, determines the application of the digit on the touch panel 107, and provides, for example, a signal 119 to the display device 116. Therefore, the user 109 uses the touch panel 107 to provide an input as more fully described hereinafter.

A motion sensing device 120, for example, an accelerometer, senses motion of the touch panel 107 and provides a signal 121 to the processor 104. A processor signal 122 provides instructions to the touch panel controller 111 to modify the input parameters in response to the sensed motion as described hereinafter. The motion sensing device 120 may be disposed preferably within an assembly (not shown) housing the touch panel 107; however, may alternatively be disposed within the user interface 102 or generally within the flight deck display system 100, avionics system, flight deck, pilot seat, or within or externally to the aircraft body so that relative motion between the pilot and the display can be detected. The worst case for vibration effects occurs when the user and the display are moving at different frequencies and amplitudes. It would be advantageous to have a motion sensor 120 on the pilot seat in addition to the flight deck display system 100, for example, so situations where the seat is vibrating and the display is not, an accurate determination of the movement pertinent to the touching of the touch panel 107 is determined.

The flight deck display system 100 optionally includes feedback device 126, including a haptic device 128 and a speaker 130, which is preferably integrated within the touch panel, and a second input device 132. The speaker 130 alternatively may be, for example, a cockpit loudspeaker or contained within a headset. When the movement of the touch panel surpasses a threshold, feedback may be provided to the aircrew, and the second input device 132 may be activated for a particular function in lieu of the touch panel 107 as discussed further herein.

The processor 104 may be any one of numerous known general-purpose microprocessors or an application specific processor that operates in response to program instructions. In the depicted embodiment, the processor 104 includes on-board RAM (random access memory) 103, and on-board ROM (read-only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. The software executing the exemplary embodiment is stored in either the ROM 105 or the RAM 103. It will be appreciated that this is merely exemplary of one scheme for storing operating system software and software routines, and that various other storage schemes may be implemented. It will also be appreciated that the processor 104 may be implemented using various other circuits, and not just a programmable processor. For example, digital logic circuits and analog signal processing circuits could also be used.

No matter how the processor 104 is specifically implemented, it is in operable communication with the terrain databases 106, the navigation databases 108, and the display devices 116, and is coupled to receive various types of inertial data from the sensors 112, and various other avionics-related data from the external data sources 114. The processor 104 is configured, in response to the inertial data and the avionics-related data, to selectively retrieve terrain data from one or more of the terrain databases 106 and navigation data from one or more of the navigation databases 108, and to supply appropriate display commands to the display devices 116. The display devices 116, in response to the display commands, selectively render various types of textual, graphic, and/or iconic information. The preferred manner in which the textual, graphic, and/or iconic information are rendered by the display devices 116 will be described in more detail further below.

The terrain databases 106 include various types of data representative of the terrain over which the aircraft is flying, and the navigation databases 108 include various types of navigation-related data. The sensors 112 may be implemented using various types of inertial sensors, systems, and or subsystems, now known or developed in the future, for supplying various types of inertial data, for example, representative of the state of the aircraft including aircraft speed, heading, altitude, and attitude. The ILS 118 provides aircraft with horizontal (or localizer) and vertical (or glide slope) guidance just before and during landing and, at certain fixed points, indicates the distance to the reference point of landing on a particular runway. The GPS receiver 124 is a multi-channel receiver, with each channel tuned to receive one or more of the GPS broadcast signals transmitted by the constellation of GPS satellites (not illustrated) orbiting the earth.

The display devices 116, as noted above, in response to display commands supplied from the processor 104, selectively render various textual, graphic, and/or iconic information, and thereby supplies visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat panel displays such as various types of LCD (liquid crystal display) and TFT (thin film transistor) displays. The display devices 116 may additionally be implemented as a panel mounted display, or any one of numerous known technologies. It is additionally noted that the display devices 116 may be configured as any one of numerous types of aircraft flight deck displays. For example, it may be configured as a multi-function display, a horizontal situation indicator, or a vertical situation indicator, just to name a few. In the depicted embodiment, however, one of the display devices 116 is configured as a primary flight display (PFD).

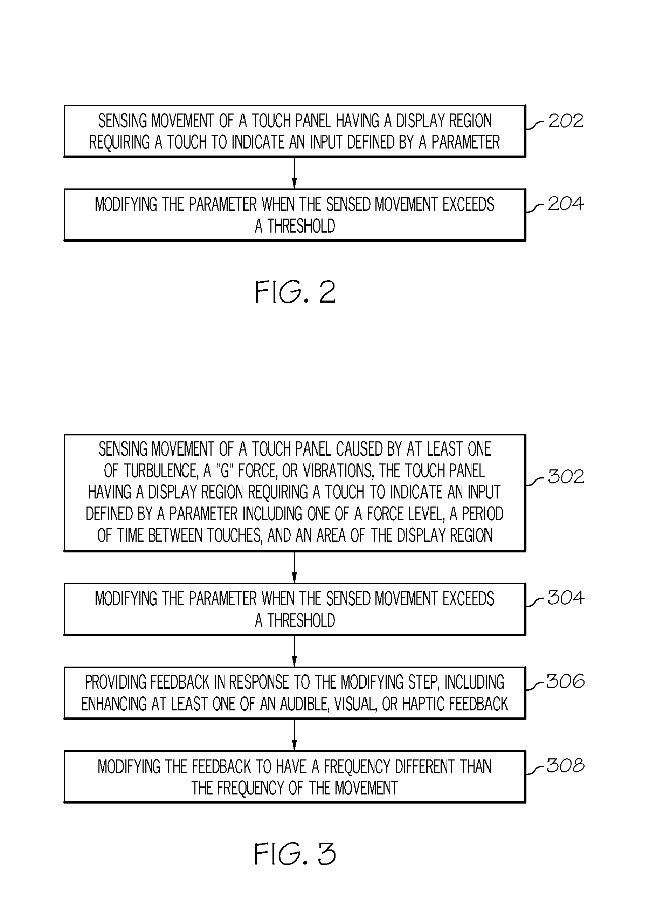

Referring to FIG. 2 and for a first method in accordance with a first exemplary embodiment, movement is sensed 202 of a touch panel having a display region requiring a touch to indicate an input defined by a parameter. The parameter is modified 204 when the sensed movement is greater than a threshold. The parameter may include, for example, a force of the touch, multiple touches within a specified time, increasing the area (size) of the region in which a touch may be applied, disabling the region from accepting a touch input, enabling an alternative input device or a soft key, and enhancing feedback of the touch. The threshold of the movement is predefined as that above which the user of the touch panel would have difficulty properly executing an accurate touch input. For example, a G force may make it difficult to apply a finger within a small region, a vibration may cause inadvertent double touches, or turbulence may alter the ability to touch the screen with a definitive force. The vibration threshold may be determined from a review of existing vibration studies and verified by experimental data collection under a variety of vehicle motion conditions.

In a second, more detailed, method in accordance with a second exemplary embodiment of FIG. 3, movement of a touch panel caused by at least one of turbulence, a "G" force, or vibrations, is sensed 302, the touch panel having a display region requiring a touch to indicate an input defined by a parameter including one of a force level, a period of time between touches, and an area of the display region, and modifying 304 the parameter when the sensed movement exceeds a threshold. Feedback may be provided 306 in response to modifying the parameter, including enhancing at least one of an audible, visual, or haptic feedback, and modifying 308 the audible and haptic feedback to have a frequency substantially different than the frequency of the movement.

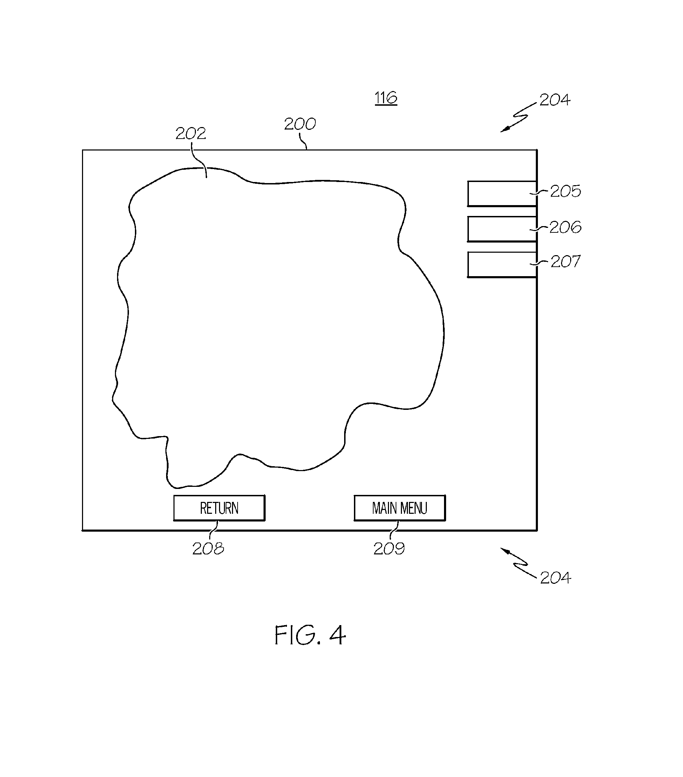

Referring to FIG. 4, a display device 116 has a touch screen display 200 including an image 202 and regions 204. The regions 204 include, for example, first, second, and third function regions 205, 206, 207 as well as the function regions RETURN 208 and MAIN MENU 209. A touch of a predefined force applied to one of the regions 204 will be registered as an input. For example, a touch of the MAIN MENU region 209 would cause the main menu to be displayed on the screen.

In one specific exemplary embodiment, when movement greater than a threshold is sensed by the motion sensing device 120, routines in the processor 104 require a greater amount of force of the touch applied to the regions 204 to be registered as an input. Such movement of the touch panel might cause the flight crew member to accidently touch an undesired region. Requiring a greater force of the touch reduces such accidental touches by ignoring inadvertent touches with forces below the threshold.

In accordance with another specific exemplary embodiment, when movement greater than a threshold is sensed by the motion sensing device 120, routines in the processor 104 may adjust the period of time between touches for registering the touch as an input. Vibrations may cause a flight crew member to inadvertently double touch (tap) a desired region 204, when only a single touch is desired. Such inadvertent double taps are prevented by increasing the time between which valid inputs are registered by the touch panel.

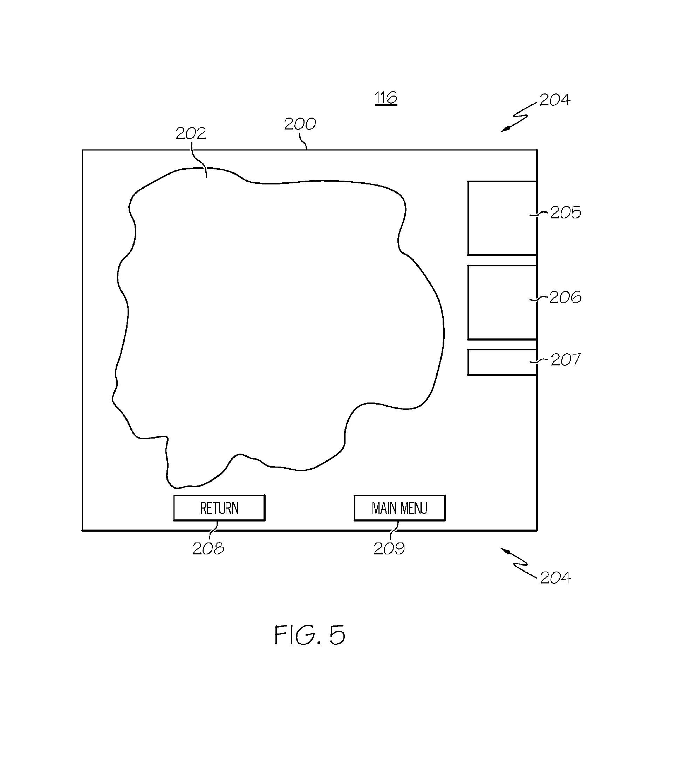

In accordance with yet another specific exemplary embodiment (FIG. 5), when movement greater than a threshold is sensed by the motion sensing device 120, routines in the processor 104 cause, for example, the regions 205, 206, 207 to increase in area (size), making it easier to touch one of the regions when the flight crew member is unable to guide his/her finger accurately onto the desired region due to the movement.

In accordance with still another specific exemplary embodiment, a region, for example region 207, may be disabled from receiving an input to the processor 104. In the example of FIG. 5, the region 207 is removed and regions 205 and 206 are enlarged. However, note that alternatively, the region 207 may be deemphasized instead of removed. The importance of disabling a region 204 may be advantageous when the particular region senses a swipe, which may be difficult for the flight crew to perform when the movement is severe, or which the flight crew may inadvertently provide during movement when attempting to enable another region 204. Additionally, when the region 207 is disabled, another input device 132, for example a switch, may be enabled. While a touch panel input normally is desired over a switch for flight crew convenience and safety under normal operations, a switch input is more of a definitive input during turbulence. Alternatively, when the region 207 is disabled, the second input device 132 may be a soft key, where the region 207 is associated with a push button on the side of the display device 116, for example. Furthermore, a screen element that normally would require a gestural input, such as a dragging motion to change the setting of a parameter, might be substituted with up and down arrows. The arrows may require more time to make an input, but they allow for more control of the input. The arrows might have always been visible, but deemphasized under conditions under which dragging motions are possible.

Visual feedback may be provided by the display device 116 in the form of a touch screen in response to a touch satisfying the input parameter by highlighting the touched region 204 or the entire image 202, for example. Haptic feedback may be provided by the haptic device 128, for example a piezoelectric actuator positioned on the electronic device chassis, and/or by a speaker 130 positioned within the chassis. Furthermore, the frequency of the haptic and auditory feedback may be changed from a predefined frequency in response to the signal 121 from the movement sensor in order to decrease the possibility of the feedback being unrecognizable due to its similarity to the sensed vibration frequency (or frequencies) or ambient noise frequency (or frequencies).

A method and input device for adapting (modifying) input requirements of a touch panel in response to detected motion improves the accuracy during the motion. As the motion surpasses a threshold above, input parameters are modified in order to improve the input accuracy

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment, it being understood that various changes may be made in the function and arrangement of elements described in an exemplary embodiment without departing from the scope as set forth in the appended claims.

## Claims

1. A method of operating a touch panel having a region adapted to receive a touch to indicate an input defined by a parameter, comprising:
sensing a movement of the touch panel;
comparing the movement to a threshold; and
modifying the parameter based at least in part on the sensing the movement if the movement is greater than or equal to the threshold.

2. The method of claim 1, wherein the parameter comprises a force level as the touch and the modifying the parameter comprises increasing the force level to register the touch as a valid input.

3. The method of claim 1, wherein the parameter comprises a period starting at the touch before a subsequent touch may be sensed as an input and the modifying the parameter comprises increasing the period before the subsequent touch may be sensed as a valid input.

4. The method of claim 1, wherein the parameter comprises a touch-sensitive area of the display region and the modifying the parameter comprises increasing the touch-sensitive area.

5. The method of claim 1, wherein the display region is configured to sense a swiping touch and the modifying the parameter comprises disabling the display region.

6. The method of claim 1, wherein the input comprises a double-touch and the modifying the parameter comprises disabling the double-touch for the display region and enabling a softkey.

7. The method of claim 1, further comprising:
providing a feedback in response to the touch; and
modifying the feedback in response to the modifying the parameter.

8. The method of claim 1, wherein the sensing the movement of the touch panel comprises sensing a gravitational force.

9. The method of claim 1, wherein the sensing the movement of the touch panel comprises sensing a vibration.

10. The method of claim 9 further comprising providing a haptic feedback at a first frequency different than a second frequency of the vibration.
